# EUROPÄISCHE PATENTSCHRIFT

(11) **EP 4 086 070 B1**
(45) Veröffentlichungstag und Bekanntmachung des Hinweises auf die Patenterteilung: **31.01.2024**
(21) Anmeldenummer: 21208532.8
(22) Anmeldetag: 16.11.2021
(51) Int. Cl.: B29D 30/48

(54) **VORRICHTUNG UND VERFAHREN ZUR HERSTELLUNG VON KERNPAKETEN FÜR FAHRZEUGLUFTREIFEN**
DEVICE AND METHOD FOR THE PRODUCTION OF CORE PACKAGES FOR PNEUMATIC VEHICLE TYRES
DISPOSITIF ET PROCÉDÉ DE FABRICATION DE PAQUETS DE NOYAUX POUR PNEUMATIQUES DE VÉHICULE

(30) Priorität: 07.05.2021 DE 102021204632
(43) Veröffentlichungstag der Anmeldung: 09.11.2022
(73) Patentinhaber: Continental Reifen Deutschland GmbH, 30165 Hannover (DE)
(72) Erfinder: Corradini, Enrico, 30165 Hannover (DE); Meier, Marvin, 30165 Hannover (DE); Reinicke, Kevin, 30165 Hannover (DE); Werner, Lukas, 30165 Hannover (DE)
(74) Vertreter: Continental Corporation

(56) Entgegenhaltungen:
- WO-A1-2017/105223
- DE-A1-102006 011 157
- DE-A1-102014 226 174
- JP-A- S 623 935

## Beschreibung

Die Erfindung betrifft eine Vorrichtung und ein Verfahren zur Herstellung von Kernpaketen aus einem Wulstkern und einem stehenden oder gekrümmten Apexprofil für Fahrzeugluftreifen, umfassend eine Zuführeinrichtung für die Zuführung des Apexprofils zu einem Auflagetisch mit radial verstellbaren Klemmbacken zum Zentrieren und Fixieren des Wulstkerns, einer Aufnahme für einen Separator sowie einer Anroll- und Schneideinrichtung für das zugeführte Apexprofil.

Es ist bekannt und üblich, im Zuge der Reifenfertigung Kernpakete, sogenannte Fertigkerne, bestehend aus Wulstkern und Apexprofil herzustellen. Der Durchmesser der Wulstkerne sowie die Höhe und die Form des Apexprofils - stehend oder gekrümmt - sind vom zu fertigenden Reifentyp bzw. der Dimension des zu fertigenden Reifens abhängig. Die Höhen des Apexprofils betragen im Allgemeinen etwa 10 mm bis 100 mm. Je nach Reifentyp sind zur Fertigung der entsprechenden Kernpakete unterschiedliche Anlagentypen, welche das Apexprofil voll- oder teilautomatisch auf den Wulstkern applizieren, im Einsatz. Häufig muss ein Bediener jedes einzelne Kernprofil von Hand einlegen und entnehmen, was sich durch die kurze Maschinenzykluszeit und das teils sehr klebrige Material stark negativ auf die Arbeitsplatzergonomie auswirkt. Des Weiteren muss der Prozess fortlaufend manuell justiert werden, was zur Folge hat, dass sowohl die Produktqualität als auch die Quantität direkt vom Maschinenbediener abhängig ist.

Unabhängig von der Höhe und der Form des Apexprofils werden die hergestellten Kernpakete zur Lagerung und zum Transport häufig durch Separatoren voneinander getrennt, deren Gestalt mit der Form des Apexprofils korreliert, sodass ein Aneinanderhaften der Kernpakete verhindert wird. Diese Separatoren sind ringförmige Kunststoffteile, welche zur Trennung von stehenden Apexprofilen in Form von flachen Ringen, sogenannten Flachseparatoren ausgeführt sind. Separatoren zur Trennung gekrümmter Apexprofile sind an jene Form angepasst, welche der Apex später im Karkassrohling annehmen soll. Das Apexprofil wird insoweit bei Herstellung des Kernpaketes entlang der Oberfläche des Separators angerollt, um dem Apexprofil die gewünschte Krümmung und Konturierung zu verleihen. Bei gekrümmten Apexprofilen ab einer Höhe von etwa 30 mm erfüllt der Separator somit neben der Trennfunktion auch die zusätzliche Aufgabe der Formgebung. Dabei ist ein konzentrischer Sitz von Separator und Wulstkern während der Herstellung und Lagerung von besonderer Bedeutung. Nach der Herstellung verhindert der am Apexprofil anliegende Separator, dass sich das Apexprofil aufgrund der entstehenden Zugspannungen einrollt und seine gewünschte Form wieder verliert.

Zur Fertigung von Kernpaketen mit stehendem Apex und einer Höhe von bis zu ca. 45 mm sind vollautomatisch arbeitende Anlagen bekannt, bei welchen das Apexprofil aus einem Zubringer direkt auf den Wulstkern gewickelt wird. Bei gekrümmten Apexprofilen werden die Separatoren nach dem Applizieren unter das Kernpaket gelegt. Eine direkte Applikation auf den Separatoren ist mit solchen Anlagen nicht möglich.

Aus der DE 10 2014 226 174 A1 ist eine Vorrichtung zur vollautomatischen Fertigung von Kernpaketen bekannt, bei der das Kernprofil bereits zu Beginn des Fertigungsprozesses auf den Separator aufgelegt und anschließend das Apexprofil angerollt wird, was jedoch die Nutzung von bereits vorab ringförmig vorgefertigten Apexprofilen erfordert und zudem bei Durchmesseränderungen eine aufwendige Umrüstung der Vorrichtung erfordert, was verbesserungswürdig erscheint.

Aufgabe der Erfindung ist es, eine Vorrichtung sowie ein Verfahren der eingangs genannten Art vorzuschlagen, welche möglichst flexibel die Herstellung von Kernpaketen unterschiedlichster Dimensionierung mit hohem Automatisierungsgrad und hoher Leistung ermöglichen.

Zur Lösung der gestellten Aufgabe wird erfindungsgemäß die Ausgestaltung einer Vorrichtung mit den Merkmalen des Patentanspruches 1 vorgeschlagen.

Vorteilhafte Ausgestaltungen und Weiterbildungen der Erfindung sind Gegenstand der abhängigen Ansprüche.

Zur Lösung der gestellten Aufgabe schlägt die Erfindung vor, dass die Aufnahme für den Separator unterhalb des Auflagetisches angeordnet ist und der Auflagetisch gemeinsam mit der Aufnahme um eine senkrecht durch den Auflagetisch verlaufende Drehachse drehbar ist, wobei der Auflagetisch mehrere Segmente umfasst, die aus einer benachbarten, den Auflagetisch bildenden Position in eine entfernte, die Aufnahme für den Separator freigegebene Position verfahrbar sind und eine Hubvorrichtung zum Absenken der Klemmbacken vorgesehen ist, dergestalt, dass der an den Klemmbacken fixierte Wulstkern gemeinsam mit dem Apexprofil auf einen in der Aufnahme gehalterten Separator ablegbar ist.

Erfindungsgemäß ist es somit möglich, einen für die Herstellung des spezifisch gewünschten Kernpakets erforderlichen Separator getrennt vom Auflagetisch zunächst unterhalb desselben zu positionieren und im Bereich des Auflagetisches mithilfe der Klemmbacken einen Wulstkern zu zentrieren und zu fixieren, woraufhin das Apexprofil vorzugsweise endlos dem zentrierten und fixierten Wulstkern zugeführt und mittels der Anroll- und Schneideinrichtung auf das gewünschte Längenmaß konfektioniert und als ringförmiges Apexprofil mit dem Wulstkern verbunden wird. Nachdem dieser Verbund aus Wulstkern und Apexprofil zur Bildung des Kernpakets erstellt worden ist, wird der Auflagetisch durch Verfahren der Segmente in die den Separator freigegebene Position geöffnet sodass die Klemmbacken anschließend den weiterhin geklemmten und zentrierten Verbund aus Wulstkern und Apexprofil auf den darunterliegenden Separator mittels der Hubvorrichtung transferieren bzw. ablegen können. In dieser Position kann das Apexprofil des Kernpakets sodann exakt der Kontur des Separators folgend an dessen Oberfläche angerollt werden, um dem Apexprofil die für den Reifenbau nötige Vorkrümmung mitzugeben.

Erfindungsgemäß ist es möglich, dass während der gesamten Herstellung das Kernprofil durch die Klemmbacken dauerhaft gespannt und zentriert gehalten wird und nach der direkten Applikation des Apexprofils auf den Separator überführt wird.

Im Anschluss kann der noch immer geklemmte Verbund aus Wulstkern und Apexprofil durch Konturrollen der Anroll- und Schneideinrichtung an den Separator angeformt und in seine finale Geometrie gebracht werden.

Es ist offensichtlich, dass die Anzahl erforderlicher Arbeitsschritte erfindungsgemäß minimiert und zugleich die Genauigkeit durch die fortlaufende Klemmung und Zentrierung des Kernprofils an den Klemmbacken bedeutend erhöht wird.

Nach einem Vorschlag der Erfindung umfasst der Auflagetisch mindestens drei Segmente, die mittels eines Antriebes radial zwischen der benachbarten und der entfernten Position verfahrbar sind. Durch Ausgestaltung mit mindestens drei Segmenten kann der Auflagetisch in einer solchen Größe gebildet werden, dass die üblichen, für die Herstellung von Reifen erforderlichen Durchmesser an Kernpaketen abgedeckt werden.

Die Segmente können nach einem weiteren Vorschlag der Erfindung beispielsweise mittels eines Servomotors verfahren werden, der eine präzise Durchmesserregelung erlaubt.

Nach einer weiteren Ausgestaltung der Erfindung sind die Klemmbacken radial innerhalb der Segmente des Auflagetisches angeordnet und werden zum Zentrieren und Fixieren des Wulstkernes radial nach außen verschoben, indem sie beispielsweise auf einem sich vertikal erstreckenden Führungskonus angeordnet sind und motorisch, servomotorisch oder pneumatisch entlang des Führungskonus verschiebbar sind. Die Klemmbacken weisen einen Verstellbereich auf, der die zu erwartenden Durchmesserschwankungen der zu klemmenden Wulstkerne innerhalb einer Reifengröße abdeckt. Durch Auswechseln der Klemmbacken und der Segmente des Tisches kann die Vorrichtung einfach auf andere Reifengrößen umgerüstet werden. Weiterhin sind die Klemmbacken mittels der vorzugsweise ebenfalls pneumatisch oder motorisch betriebenen Hubvorrichtung entlang der Drehachse des Auflagetisches absenkbar. Dabei ist ein Hub von wenigen Millimetern ausreichend, da im Wesentlichen nur die Dicke des Auflagetisches überwunden werden muss.

Nach einem weiteren Vorschlag der Erfindung ist auch die Aufnahme für den Separator mit Mitteln zum Zentrieren und Klemmen des Separators ausgebildet, sodass auch dieser mit hoher Präzision konzentrisch zu dem in den Klemmbacken zentrierten Wulstkern vorgehalten werden kann.

Die Zuführeinrichtung für die Zuführung des vorzugsweise endlos angelieferten Apexprofils ist nach einem weiteren Vorschlag der Erfindung so ausgebildet, dass das Apexprofil im Wesentlichen tangential dem auf dem Auflagetisch gehalterten Wulstkern zugeführt wird. Der Auflagetisch kann zudem mit einer Klemmeinrichtung zum festklemmen des voreilenden Endes des zugeführten Apexprofils ausgebildet sein.

Nach einem weiteren Vorschlag der Erfindung ist die Anroll- und Schneideinrichtung höhenverstellbar über dem Auflagetisch angeordnet, beispielsweise mittels Pneumatikzylindern höhenverstellbar, sodass sie bzw. Teile derselben zum Abtrennen eines Abschnittes des zugeführten Apexprofils und zum Anrollen des Apexprofils wahlweise auf den Auflagetisch und/oder den Separator absenkbar ist. Die Höhenverstellung der Anroll- und Schneideinrichtung ist dabei vorzugsweise derart angeordnet, dass die nach oben gerichtete Bewegung schräg nach außen erfolgt, indem die Verstellrichtung unter einem Winkel gegenüber der Vertikalen nach außen geneigt verläuft. Beim Rückzug nach oben bewegt sich die Anroll- und Schneideinrichtung somit gleichzeitig in radialer Richtung nach außen. Auf diese Weise wird der Raum oberhalb des Tisches freigegeben, um den fertiggestellten Wulstkern mit Separator durch einen Greifer vertikal von oben entnehmen zu können.

Da der Auflagetisch mitsamt den Klemmbacken sowie der Aufnahme für den Separator während des Herstellprozesses um eine sich vorzugsweise vertikal erstreckende Drehachse rotiert, wird nach einem weiteren Vorschlag der Erfindung vorgeschlagen, dass diese Bauteile auf einer gemeinsamen Grundplatte angeordnet sind, die mittels eines geeigneten Drehantriebes um die Drehachse gedreht wird.

Das erfindungsgemäße Verfahren zur Herstellung von Kernpaketen aus einem Wulstkern und einem stehenden oder gekrümmten Apexprofil für Fahrzeugluftreifen nutzt die vorangehend erläuterte erfindungsgemäße Vorrichtung und umfasst die folgenden Schritte:
a) Bereitstellen eines Separators in der Aufnahme;
b) Schließen der Segmente zur Bildung des Auflagetisches und Aufbringen eines ringförmigen Wulstkernes auf den Auflagetisch sowie Festklemmen und Zentrieren des Wulstkernes durch radiales Aufweiten der Klemmbacken;
c) im Wesentlichen tangentiales Zuführen des Apexprofils an den Wulstkern unter Rotation des Auflagetisches um die Drehachse;
d) Ablängen des Apexprofils, Verbinden der Enden zu einem geschlossenen Ring und Anrollen des Apexprofils am Wulstkern zur Ausbildung des Kernpakets;
e) Verfahren der Segmente des Auflagetisches in die den Separator freigegebene Position und Absenken der Klemmbacken zur Ablage des festgeklemmten Kernpakets auf dem Separator;
f) Anrollen des Apexprofils an die Oberfläche des Separators.

Durch die vorangehend erläuterten Schritte wird ein beliebiges Kernpaket auf der erfindungsgemäßen Vorrichtung nach dem erfindungsgemäßen Verfahren hergestellt, wobei selbstverständlich die einzelnen Schritte nicht aufeinanderfolgend, sondern zum Teil auch gleichzeitig bzw. in abgewandelter Reihenfolge durchgeführt werden können.

Es versteht sich, dass das fertige auf dem Separator aufliegende Kernpaket, gebildet aus den miteinander verbundenen Bauteilen Wulstkern und Apexprofil, anschließend freigegeben und entnommen wird.

Nach einem weiteren Vorschlag der Erfindung werden die Segmente in Bezug auf die Drehachse des Auflagetisches radial zwischen der geschlossenen Position gemäß Schritt a) und der freigegebenen Position gemäß Schritt e) verfahren.

Weiterhin ist vorgesehen, dass der bereitgestellte Separator in der Aufnahme festgeklemmt und zentriert wird.

Zur Sicherstellung einer zuverlässigen Zuführung des Apexprofils kann dessen voreilendes Ende auf dem Auflagetisch mit einer geeigneten Klemmeinrichtung festgeklemmt werden. Ferner kann während der tangentialen Zuführung des Apexprofils an den Wulstkern ein Andrücken des Apexprofils an den Wulstkern im Fußbereich desselben bewirkt werden.

Mit dem erfindungsgemäßen Verfahren sowie der Vorrichtung wird größtmögliche Flexibilität bei der Herstellung unterschiedlichster Kernpakete erreicht. Insbesondere ist es möglich, Kernpakete an einem Separator anzurollen, um dem Apexprofil die vorgegebene Formgebung des Separators zu verleihen.

Sofern bei niedrigen stehenden Apexprofilen ein solches Anrollen an der Oberfläche des Separators nicht erforderlich sein sollte, können auch solche Kernpakete auf der erfindungsgemäßen Vorrichtung hergestellt werden. In diesem Fall wird in die Aufnahme für den Separator kein Separator eingelegt und das Kernprofil lediglich zwischen den Klemmbacken auf dem Auflagetisch geklemmt und zentriert und anschließend das zugeführte Apexprofil auf dem Auflagetisch aufgebracht. Die im erfindungsgemäßen Verfahren angegebenen Schritte e) und f) betreffend das Öffnen des Auflagetisches in die den Separator freigebende Position und das Anrollen des Apexprofils an die Oberfläche des Separators können dann entfallen.

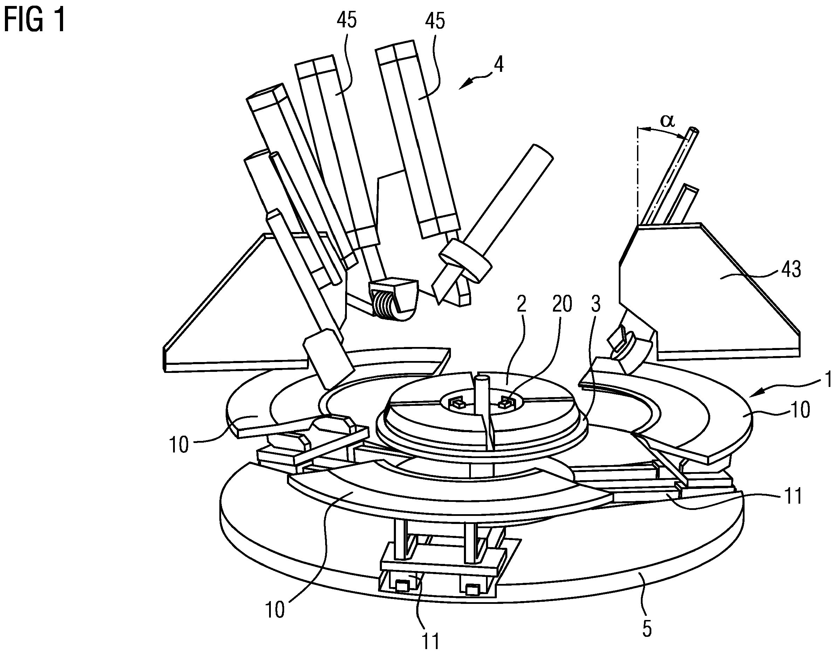

Weitere Ausgestaltungen und Einzelheiten der Erfindung werden nachfolgend anhand der ein Ausführungsbeispiel darstellenden Zeichnung näher erläutert. Die Figuren 1 bis 5 zeigen dabei in chronologisch aufeinanderfolgender Reihe einzelne Bearbeitungsschritte zur Herstellung eines Kernpakets für die Herstellung von Fahrzeugluftreifen.

Die Figuren zeigen die wesentlichen Bestandteile einer Vorrichtung zum Herstellen von Kernpaketen aus einem Wulstkern und einem stehenden oder gekrümmten Apexprofil im Zuge der Herstellung von Fahrzeugluftreifen.

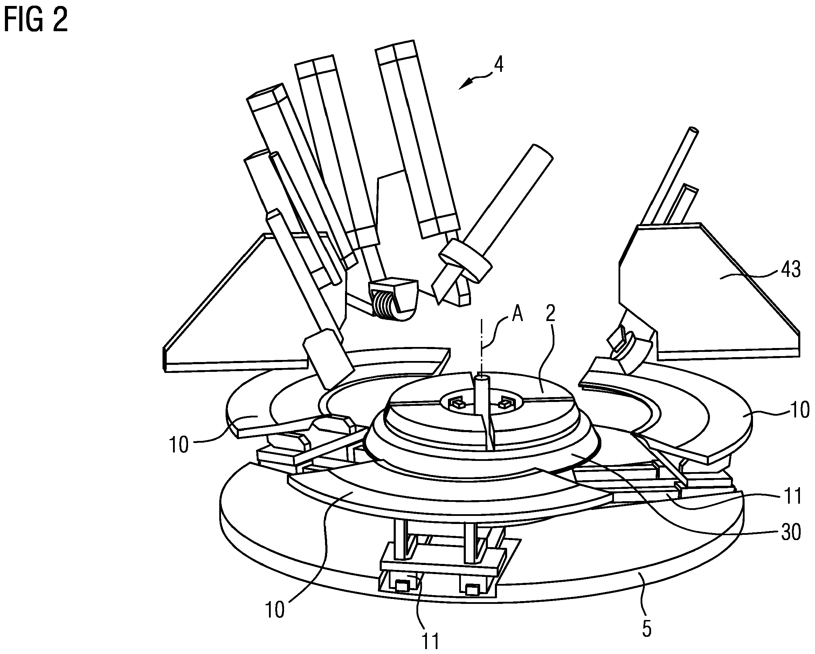

Die Vorrichtung umfasst eine Grundplatte 5, welche mittels eines nicht dargestellten Antriebsmotors um die in der Figur 2 eingezeichnete zentrale und sich vertikal erstreckende Drehachse A drehantreibbar ist.

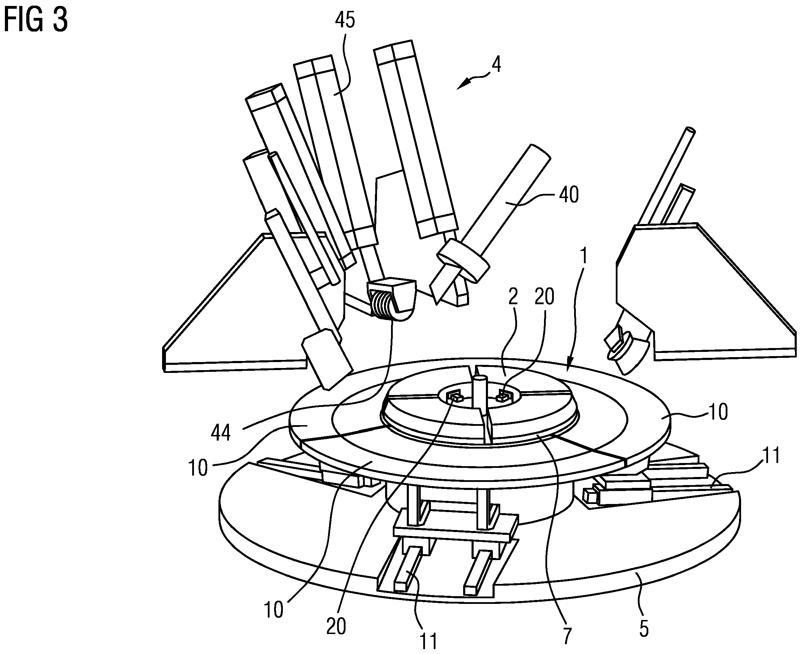

Auf der drehbaren Grundplatte 5 sind jeweils paarweise angeordnete Linearantriebe 11 angeordnet, die drei auf entsprechenden Schlitten montierte Segmente 10 eines Auflagetisches 1 tragen. Entsprechend der radialen Anordnung der Linearantriebe 11 sind die Segmente aus der in der Figur 1 dargestellten geöffneten Position radial nach innen in eine geschlossene Position verfahrbar, in der sie einander fortsetzen und den ringförmigen, zusammenhängenden Auflagetisch 1 bilden, der beispielsweise aus der Figur 3 ersichtlich ist. Die Drehachse D erstreckt sich senkrecht durch den Auflagetisch 1.

Radial innerhalb der Segmente 10 des Auflagetisches 1 ist ferner eine ringförmige Aufnahme 3 für einen Separator vorgesehen, die gemeinsam mit dem Auflagetisch 1 bei Rotation der Grundplatte 5 in Rotation versetzt wird. Ebenfalls innerhalb der Segmente 10 des Auflagetisches sind vier sich segmentartig zu einem Ring ergänzende Klemmbacken 2 vorgesehen, die jeweils an konisch zulaufenden und sich vertikal erstreckenden Konusführungen 20 befestigt sind und beispielsweise pneumatisch in den Konusführungen 20 bewegt werden können, sodass der Durchmesser der von den Klemmbacken 2 gebildeten Struktur verändert werden kann.

Schließlich erkennt man oberhalb des geöffneten Aufnahmetisches 1 noch eine Anroll- und Schneideinrichtung 4, die in nicht näher dargestellter Weise mittels Haltewinkeln 43 an einem Vorrichtungsgestell (nicht dargestellt) befestigt ist und deren nachfolgend noch näher erläuterte Einzelbestandteile mittels Pneumatikzylindern 45 unabhängig voneinander unter einem gegenüber der Vertikalen nach außen geneigten Winkel a, siehe Fig. 1, in Richtung des Auflagetisches 1 und/oder der Aufnahme 3 für einen Separator in Arbeitsposition verfahren werden können. In der in Fig. 1 dargestellten, maximal nach oben verlagerten Ruheposition ist die Anroll- und Schneideinrichtung 4 aufgrund des unter dem Winkel α verlaufenden Verfahrweges radial nach außen verlagert und gibt den Raum oberhalb der Klemmbacken 2 frei, um die nachfolgend erläuterte Zuführung von Separatoren und Wulstkernen sowie die spätere Entnahme des fertigen Kernpakets mitsamt Separator mittels nicht dargestellter Greifer zu ermöglichen.

Die Funktionsweise der in der Figur 1 in Ausgangsposition dargestellten Vorrichtung ist folgende:
Zunächst wird von oben durch den geöffneten Auflagetisch 1 mit den in der Freigabeposition befindlichen Segmenten 10 hindurch auf der Aufnahme 3 ein Separator 30 befestigt, wie in Figur 2 dargestellt. Ein solcher Separator 30 ist ein mehrfach wiederverwendbares Kunststoffbauteil, welches auf seiner der Anroll- und Schneideinrichtung 4 zugewandten Oberfläche die Kontur des Apexprofils des zu erstellenden Kernpakets vorgibt. Entsprechende, nicht näher dargestellte Klemm- und Zentrierungsmittel der Aufnahme 3 stellen sicher, dass der Separator 30 exakt konzentrisch zur Drehachse A in der Vorrichtung angeordnet wird.

Anschließend werden die radial außenseitig vorgesehenen Segmente 10 des Auflagetisches 1 geschlossen, indem die Linearführungen 11 eine radial einwärts gerichtete Bewegung auf der Grundplatte 5 initiieren. Die Segmente 10 werden beispielsweise über Servomotoren geregelt angetrieben, sodass die Durchmesserverstellung unabhängig von der Drehzahl des Auflagetisches 1 erfolgt, beispielsweise durch mechanische Kopplung per Differentialgetriebe. Der geschlossene Auflagetisch 1 ist in Figur 3 dargestellt.

Sodann wird in einem weiteren Arbeitsschritt ein bereits vorgefertigter ringförmiger Wulstkern 7 ebenfalls von oben in die Vorrichtung eingelegt und auf den Auflagetisch 1 aufgelegt. Mittels der radial nach außen bis zur Anlage am Wulstkern 7 verschobenen Klemmbacken 2 wird er dann ebenfalls konzentrisch zur Drehachse A zentriert und gespannt. Dies wird dadurch bewirkt, dass die Klemmbacken vertikal abwärts entlang der Konusführungen 20 zum Beispiel pneumatisch oder hydraulisch bewegt werden, wobei sich der Durchmesser des von den einzelnen Klemmbacken 2 gebildeten Ringes nach Maßgabe der Konussteigung vergrößert. Der Wulstkern 7, der üblicherweise aus mit Gummimasse ummanteltem Stahldraht gebildet ist, wird auf diese Weise mittels der Klemmbacken 2 radial innenseitig geklemmt und zentriert, wobei der geschlossene Auflagetisch 1 den an den Klemmbacken 2 gehalterten Wulstkern 7 außenseitig umgibt werden

In diesem Zustand kann in nicht näher dargestellter Weise von einer geeigneten Zuführeinrichtung tangential auf den Auflagetisch 1 und an den zentrierten und eingeklemmten Wulstkern 7 heran das hier nicht dargestellte Apexprofil zugeführt werden, beispielsweise aus einem entsprechenden Materialvorrat oder zum Beispiel Inline aus einer entsprechenden Extrusionseinrichtung. Eine am Auflagetisch 1 vorgesehene Klemmeinrichtung fixiert dabei das voreilende Ende des zugeführten Apexprofils. Während der Zuführung des Apexprofils wird die Grundplatte 5 mitsamt des daran befestigten Auflagetisches 1 sowie der den Wulstkern 7 tragenden Klemmbacken 2 kontinuierlich um die Drehachse A, welche vertikal durch den Auflagetisch 1 verläuft, gedreht. Sobald ein für den vollständigen Umlauf um den Wulstkern 7 ausreichender Abschnitt des Apexprofils zugeführt worden ist, kann dieses mittels des hydraulisch oder pneumatisch betätigten Trennmessers 40 der Anroll- und Schneideinrichtung 4 abgetrennt werden, in dem das Trennmesser 40 kurzzeitig in den Zuführweg des Apexprofils abgesenkt wird und dieses durchtrennt. Anschließend oder zeitgleich kann das an seinen beiden Enden zu einem Ring verbundene Apexprofil mittels der Andruckrollen 44, die über den Pneumatikzylinder 45 kurzzeitig abgesenkt werden, an den zentriert eingeklemmten Wulstkern 7 beispielsweise in dessen Fußbereich angerollt und somit mit diesem unter Ausbildung des gewünschten Kernpakets verbunden werden. Das Apexprofil ist somit bereits mit dem Wulstkern 7 verbunden, womit bei einem stehenden Apexprofil geringer Höhe die Herstellung des Kernpaketes bereits abgeschlossen wäre. In diesem Fall könnte auch auf die anfänglich erfolgte Einlegung eines Separators 30 in die entsprechende Aufnahme 3 verzichtet werden.

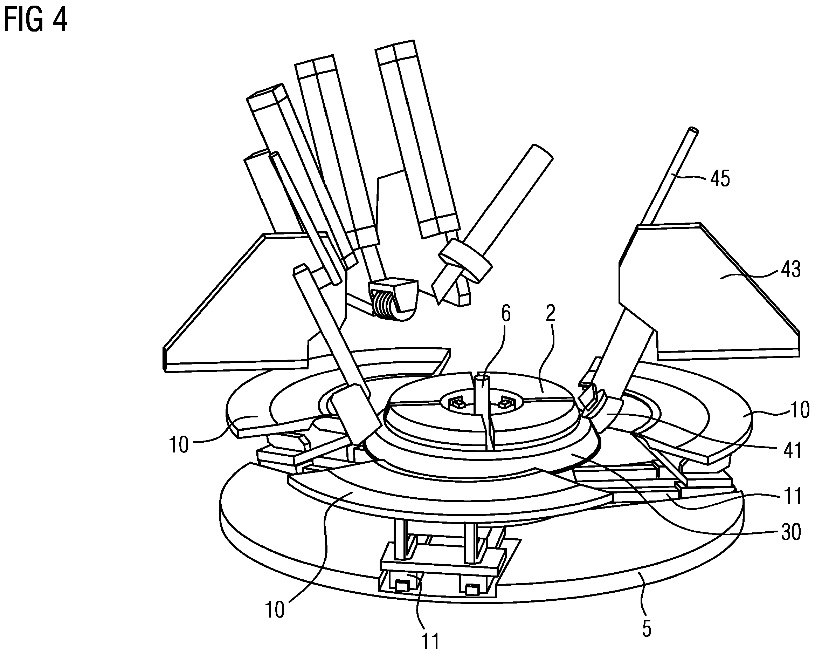

Sofern unter Rückgriff auf einen in die Aufnahme 3 eingelegten und zentrierten Separator 30 das Apexprofil eine entsprechende Kontur bzw. Form des Separators erhalten soll, was beispielsweise bei hohen gekrümmten Apexprofilen etwa für Reifen mit Notlaufeigenschaften der Fall ist, wird nach dem Anrollen des Apexprofils am Wulstkern 7 gemäß Darstellung in der Figur 4 der Auflagetisch 1 durch radial nach außen erfolgendes Verlagern der Segmente 10 in eine freigebende Position geöffnet, in der unterhalb des nun geöffneten Auflagetisches der in der Aufnahme 3 gehalterte und zentrierte Separator 30 zugänglich wird.

Nunmehr kann mittels einer nicht näher dargestellten vertikalen Hubvorrichtung 6 die gesamte drehbare Anordnung aus Klemmbacken 2 und Konusführungen 20 mitsamt dem immer noch zentriert mittels der Klemmbacken 2 gehaltenen Wulstkern 7 und dem daran bereits anhaftenden Apexprofil vertikal nach unten verlagert werden, bis das Apexprofil mit dem Wulstkern 7 auf dem bereitgestellten Separator 30 zur Anlage kommt. Auch der Separator 30 wird mitsamt seiner Aufnahme 3 durch weiterhin erfolgende Rotation der Grundplatte 5 um die Drehachse A in Rotation versetzt. Nunmehr kann durch entsprechende Betätigung von Pneumatikzylindern 45 das Anrollen der Außenkontur des Apexprofils an den Umfang des Separators 30 erfolgen, in dem entsprechende Außenkonturrollen 41 an den Umfang des Separators 30 unter Zwischenlage des Apexprofils angelegt werden. In der Darstellung gemäß Figur 4 ist aus Gründen der besseren Übersichtlichkeit das Apexprofil zwischen Separator 30 und Außenkonturrolle 41 nicht dargestellt.

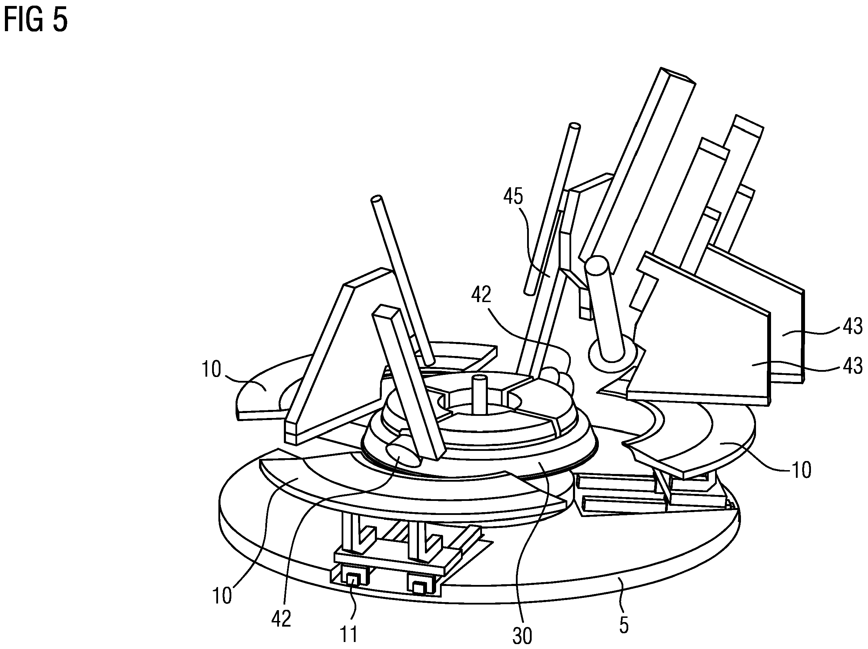

Schließlich kann gemäß Darstellung in der Figur 5 auch die Innenkontur des Apexprofils durch Betätigung des die Innenkonturrollen 42 tragenden Pneumatikzylinders 45 und Anlage derselben am Separator 30 unter Zwischenlage des hier nicht dargestellten Apexprofils in Letzteres übertragen werden.

Anschließend kann die Klemmwirkung der Klemmbacken 2 aufgehoben werden und das konturierte Kernpaket mitsamt dem Separator 30 nach oben aus der Vorrichtung entnommen werden, worauf hin der Vorgang von neuem beginnt.

Wesentlicher Vorteil des vorangehend erläuterten Herstellungsverfahrens auf der dargestellten Vorrichtung ist es, dass unterschiedlichste Dimensionen von Separatoren 30 und verschiedene Durchmesser von Wulstkernen 7 verarbeitet werden können, da die gesamte Vorrichtung durchmesser- und höhenvariabel ist. Ein Wechsel der Reifendimension kann durch Austausch entsprechender Wechselteile z.B. für die Klemmbacken 2, leicht vorgenommen werden. Die Anroll- und Schneideinrichtung 4 ist zudem horizontal verschieblich in den Haltewinkeln 43 gelagert, um Anpassungen an unterschiedliche Durchmesser der herzustellenden Kernpakete vornehmen zu können.

Sobald der Wulstkern 7 innenseitig von den nach außen bewegten Klemmbacken 2 festgeklemmt und bezüglich der Drehachse A zentriert ist, wird diese Zentrierung bis zum Abschluss des Anrollvorganges des zugeführten Apexprofils auf den Separator 30 nicht aufgehoben. Vielmehr wird der zentrierte und geklemmte Wulstkern 7 gemeinsam mit dem Apexprofil durch einen vertikalen Hub von lediglich einigen wenigen Millimetern auf dem ebenfalls zentrierten und bereitgestellten Separator 30 definiert und konzentrisch abgelegt und während des gesamten weiteren Anrollvorgangs von den Klemmbacken 2 zentriert. Die mit der Vorrichtung erzielbaren Produktionsgenauigkeiten stellen damit eine signifikante Verbesserung der Produktqualität dar.

Sofern Kernpakete ohne Formgebung des Apexprofils an einem Separator 30 hergestellt werden sollen, ist die dargestellte Verrichtung dazu ebenfalls ohne Umrüstung geeignet. In diesem Falle wird zu Beginn des Herstellvorganges auf das Einlegen eines Separators 30 unterhalb des Auflagetisches 1 verzichtet und nach Anrollen des zugeführten Apexprofils 1 können die Klemmbacken 2 geöffnet und das bereits fertig gestellte Kernpaket entnommen werden. Es entfallen insoweit die Öffnungs- und Schließschritte für den Auflagetisch 1.

Mit dem vorangehend erläuterten Verfahren und der Vorrichtung ist es somit möglich, sowohl kleine Profile mit Standardmischungen oder hohe Profile im Bereich des Apex zu Kernpaketen zu verarbeiten. Es können die unterschiedlichsten Prozesse in einer einzigen Anlage vereint werden, wobei eine erheblich verbesserte Ergonomie, Automatisierung sowie Produktqualität und Qualitätsüberwachung erreicht werden.

### Bezugszeichenliste

- 1:: Auflagetisch
- 2:: Klemmbacken
- 3:: Aufnahme
- 4:: Anroll- und Schneideinrichtung
- 5:: Grundplatte
- 6:: Hubvorrichtung
- 7:: Wulstkern
- 10:: Segmente
- 11:: Linearführungen
- 20:: Konusführung
- 30:: Separator
- 40:: Trennmesser
- 41:: Außenkonturrollen
- 42:: Innenkonturrollen
- 43:: Haltewinkel
- 44:: Andruckrollen
- 45:: Pneumatikzylinder

- α:: Neigungswinkel

## Patentansprüche

1. Vorrichtung zur Herstellung von Kernpaketen aus einem Wulstkern (7) und einem stehenden oder gekrümmten Apexprofil für Fahrzeugluftreifen, umfassend eine Zuführeinrichtung für die Zuführung des Apexprofils zu einem Auflagetisch (1) mit radial verstellbaren Klemmbacken (2) zum Zentrieren und Fixieren des Wulstkernes (7), einer Aufnahme (3) für einen Separator (30) sowie einer Anroll- und Schneideinrichtung (4) für das zugeführte Apexprofil, **dadurch gekennzeichnet, dass** die Aufnahme (3) für den Separator (30) unterhalb des Auflagetisches (1) angeordnet ist und der Auflagetisch (1) gemeinsam mit der Aufnahme (3) um eine senkrecht durch den Auflagetisch (1) verlaufende Drehachse (A) drehbar ist, wobei der Aufnahmetisch (1) mehrere Segmente (10) umfasst, die aus einer benachbarten, den Auflagetisch (1) bildenden Position in eine entfernte, die Aufnahme (3) für den Separator (30) freigebende Position verfahrbar sind und eine Hubvorrichtung (6) zum Absenken der Klemmbacken (2) vorgesehen ist, dergestalt, dass der an den Klemmbacken (2) fixierte Wulstkern (7) gemeinsam mit dem Apexprofil auf einen in der Aufnahme (3) gehalterten Separator (30) ablegbar ist.

2. Vorrichtung nach Anspruch 1, **dadurch gekennzeichnet, dass** der Auflagetisch (1) mindestens drei Segmente (10) umfasst, die mittels eines Antriebes radial zwischen der benachbarten und der entfernten Position verfahrbar sind.

3. Vorrichtung nach Anspruch 1 oder 2, **dadurch gekennzeichnet, dass** die Segmente (10) mittels eines Servomotors verfahrbar sind.

4. Vorrichtung nach einem der Ansprüche 1 bis 3, **dadurch gekennzeichnet, dass** die Klemmbacken (2) radial innerhalb der Segmente (10) des Auflagetisches (1) angeordnet und zum Zentrieren und Fixieren des Wulstkernes (7) radial nach außen verschiebbar sind und mittels der Hubvorrichtung (6) entlang der Drehachse (A) des Auflagetisches (1) absenkbar sind.

5. Vorrichtung nach einem der Ansprüche 1 bis 4, **dadurch gekennzeichnet, dass** die Aufnahme (3) für den Separator (30) mit Mitteln zum Zentrieren und Klemmen eines Separators (30) ausgebildet ist.

6. Vorrichtung nach einem der Ansprüche 1 bis 5, **dadurch gekennzeichnet, dass** die Zuführeinrichtung für die Zuführung des Apexprofils so angeordnet ist, dass das Apexprofil im Wesentlichen tangential dem auf dem Auflagetisch (1) gehalterten Wulstkern (7) zugeführt wird.

7. Vorrichtung nach einem der Ansprüche 1 bis 6, **dadurch gekennzeichnet, dass** die Anroll- und Schneideinrichtung (4) höhenverstellbar über dem Auflagetisch (1) angeordnet ist und zum Abtrennen eines Abschnittes des zugeführten Apexprofils und zum Anrollen des Apexprofils auf den Auflagetisch (1) und/oder den Separator (30) absenkbar ist.

8. Vorrichtung nach Anspruch 7, **dadurch gekennzeichnet, dass** die Anroll- und Schneideinrichtung (4) unter einem Winkel (α) gegenüber der Vertikalen nach außen geneigt höhenverstellbar ist.

9. Vorrichtung nach einem der Ansprüche 1 bis 8, **dadurch gekennzeichnet, dass** der Auflagetisch (1), die Aufnahme (3) für den Separator und die Klemmbacken (2) gemeinsam auf einer um die Drehachse (A) drehangetriebenen Grundplatte (5) angeordnet sind.

10. Verfahren zur Herstellung von Kernpaketen aus einem Wulstkern (7) und einem stehenden oder gekrümmten Apexprofil für Fahrzeugluftreifen auf einer Vorrichtung gemäß den vorangehenden Ansprüchen, umfassend die folgenden Schritte:
a) Bereitstellen eines Separators (30) in der Aufnahme (3);
b) Schließen der Segmente (10) zur Bildung des Auflagetisches (1) und Aufbringen eines ringförmigen Wulstkernes (7) auf dem Auflagetisch (1) und Festklemmen und Zentrieren des Wulstkernes (7) durch radiales Aufweiten der Klemmbacken (2);
c) im Wesentlichen tangentiales Zuführen des Apexprofils an den Wulstkern (7) unter Rotation des Auflagetisches (1) um die Drehachse (A);
d) Ablängen des Apexprofils, Verbinden der Enden zu einem geschlossenen Ring und Anrollen des Apexprofils am Wulstkern (7) zur Ausbildung des Kernpakets;
e) Verfahren der Segmente (10) des Auflagetisches (1) in die den Separator (30) freigebende Position und Absenken der Klemmbacken (2) zur Ablage des festgeklemmten Kernpakets auf dem Separator (30);
f) Anrollen des Apexprofils an die Oberfläche des Separators (30).

11. Verfahren nach Anspruch 10, **dadurch gekennzeichnet, dass** die Segmente (10) in Bezug auf die Drehachse (A) des Auflagetisches (1) radial zwischen der geschlossenen Position gemäß Schritt a) und der freigebenden Position gemäß Schritt e) verfahren werden.

12. Verfahren nach Anspruch 10 oder 11, **dadurch gekennzeichnet, dass** der bereitgestellte Separator (30) in der Aufnahme (3) festgeklemmt und zentriert wird.

## Claims

1. Device for producing core assemblies composed of a bead core (7) and of an upright or curved apex profile for pneumatic vehicle tyres, comprising a feed device for feeding the apex profile to a bearing table (1) with radially adjustable clamping jaws (2) for centring and fixing the bead core (7), a receptacle (3) for a separator (30), and the rolling-on and cutting device (4) for the fed apex profile, **characterized in that** the receptacle (3) for the separator (30) is arranged below the bearing table (1) and the bearing table (1) is rotatable jointly with the receptacle (3) about an axis of rotation (A) running vertically through the bearing table (1), wherein the bearing table (1) comprises multiple segments (10) which are movable from an adjacent position, in which they form the bearing table (1), into a remote position, in which they open up the receptacle (3) for the separator (30), and a stroke-imparting device (6) is provided for lowering the clamping jaws (2) such that the bead core (7) fixed to the clamping jaws (2) can be laid together with the apex profile onto a separator (30) that is held in the receptacle (3).

2. Device according to Claim 1, **characterized in that** the bearing table (1) comprises at least three segments (10) which are movable radially between the adjacent and the remote position by means of a drive.

3. Device according to Claim 1 or 2, **characterized in that** the segments (10) are movable by means of a servomotor.

4. Device according to one of Claims 1 to 3, **characterized in that** the clamping jaws (2) are arranged radially within the segments (10) of the bearing table (1) and are displaceable radially outwards in order to centre and fix the bead core (7) and are lowerable along the axis of rotation (A) of the bearing table (1) by means of the stroke-imparting device (6).

5. Device according to one of Claims 1 to 4, **characterized in that** the receptacle (3) for the separator (30) is designed with means for centring and clamping a separator (30).

6. Device according to one of Claims 1 to 5, **characterized in that** the feed device for feeding the apex profile is arranged in such a manner that the apex profile is fed substantially tangentially to the bead core (7) held on the bearing table (1).

7. Device according to one of Claims 1 to 6, **characterized in that** the rolling-on and cutting device (4) is arranged height-adjustably above the bearing table (1) and can be lowered for severing a section of the fed apex profile and for rolling the apex profile onto the bearing table (1) and/or the separator (30).

8. Device according to Claim 7, **characterized in that** the rolling-on and cutting device (4) is height-adjustable at an angle (α) inclined outwards in relation to the vertical.

9. Device according to one of Claims 1 to 8, **characterized in that** the bearing table (1), the receptacle (3) for the separator and the clamping jaws (2) are arranged jointly on a base plate (5) which is driven rotationally about the axis of rotation (A).

10. Method for producing core assemblies composed of a bead core (7) and of an upright or curved apex profile for pneumatic vehicle tyres on a device according to the preceding claims, comprising the following steps:
a) providing a separator (30) in the receptacle (3);
b) closing the segments (10) in order to form the bearing table (1) and placing an annular bead core (7) on the bearing table (1) and securely clamping and centring the bead core (7) by radial expansion of the clamping jaws (2);
c) feeding the apex profile substantially tangentially to the bead core (7) by rotation of the bearing table (1) about the axis of rotation (A);
d) cutting the apex profile to length, connecting the ends to form a closed ring and rolling the apex profile on the bead core (7) in order to form the core assembly;
e) moving the segments (10) of the bearing table (1) into the position releasing the separator (30) and lowering the clamping jaws (2) in order to deposit the securely clamped core assembly on the separator (30);
f) rolling the apex profile onto the surface of the separator (30).

11. Method according to Claim 10, **characterized in that** the segments (10) are moved radially with respect to the axis of rotation (A) of the bearing table (1) between the closed position according to step a) and the releasing position according to step e).

12. Method according to Claim 10 or 11, **characterized in that** the provided separator (30) is firmly clamped and centred in the receptacle (3).

## Revendications

1. Dispositif pour la fabrication d'ensembles de noyaux à partir d'un noyau de bourrelet (7) et d'un profilé de sommet debout ou courbé pour des pneumatiques de véhicules, comprenant un dispositif d'amenée pour l'amenée du profilé de sommet à une table de support (1) ayant des mâchoires de serrage (2) réglables radialement pour le centrage et la fixation du noyau de bourrelet (7), un logement (3) pour un séparateur (30) ainsi qu'un dispositif (4) de roulage et de coupe pour le profilé de sommet amené, **caractérisé en ce que** le logement (3) pour le séparateur (30) est agencé en dessous de la table de support (1) et la table de support (1) est apte à tourner conjointement avec le logement (3) autour d'un axe de rotation (A) s'étendant perpendiculairement à travers la table de support (1), la table de support (1) comprenant plusieurs segments (10) qui sont aptes à être déplacés d'une position voisine formant la table de support (1) vers une position d'éloignement, libérant le logement (3) pour le séparateur (30), et un dispositif de levage (6) est prévu pour abaisser les mâchoires de serrage (2), de telle sorte que le noyau de bourrelet (7) fixé sur les mâchoires de serrage (2) est apte à être déposé avec le profilé de sommet sur un séparateur (30) maintenu dans le logement (3).

2. Dispositif selon la revendication 1, **caractérisé en ce que** la table de support (1) comprend au moins trois segments (10) qui sont aptes à être déplacés radialement entre la position adjacente et la position d'éloignement au moyen d'un entraînement.

3. Dispositif selon la revendication 1 ou 2, **caractérisé en ce que** les segments (10) sont déplaçables au moyen d'un servomoteur.

4. Dispositif selon l'une des revendications 1 à 3, **caractérisé en ce que** les mâchoires de serrage (2) sont disposées radialement à l'intérieur des segments (10) de la table de support (1) et sont aptes à être déplacées radialement vers l'extérieur pour le centrage et la fixation du noyau de bourrelet (7) et sont aptes à être abaissées le long de l'axe de rotation (A) de la table de support (1) au moyen du dispositif de levage (6).

5. Dispositif selon l'une des revendications 1 à 4, **caractérisé en ce que** le logement (3) pour le séparateur (30) est réalisé avec des moyens de centrage et de serrage d'un séparateur (30).

6. Dispositif selon l'une des revendications 1 à 5, **caractérisé en ce que** le dispositif d'alimentation pour l'amenée du profilé de sommet est agencé de manière à ce que le profilé de sommet soit amené sensiblement tangentiellement au noyau de bourrelet (7) maintenu sur la table support (1).

7. Dispositif selon l'une des revendications 1 à 6, **caractérisé en ce que** le dispositif (4) de roulage et de coupe est disposé de manière réglable en hauteur au-dessus de la table de support (1) et est apte à être abaissé sur la table de support (1) et/ou le séparateur (30) pour séparer une section du profilé de sommet amené et pour rouler le profilé de sommet.

8. Dispositif selon la revendication 7, **caractérisé en ce que** le dispositif (4) de roulage et de coupe est apte à être réglé en hauteur en étant incliné vers l'extérieur selon un angle (α) par rapport à la verticale.

9. Dispositif selon l'une des revendications 1 à 8, **caractérisé en ce que** la table de support (1), le logement (3) pour le séparateur et les mâchoires de serrage (2) sont agencés ensemble sur une plaque de base (5) entraînée en rotation autour de l'axe de rotation (A).

10. Procédé de fabrication de paquets de noyaux constitués d'un noyau de bourrelet (7) et d'un profilé de sommet debout ou courbé pour des pneumatiques de véhicules sur un dispositif selon les revendications précédentes, comprenant les étapes suivantes :
a) prévoir un séparateur (30) dans le logement (3) ;
b) fermer les segments (10) pour former la table de support (1) et mettre en place un noyau de bourrelet annulaire (7) sur la table de support (1) et serrer et centrer le noyau de bourrelet (7) par élargissement radial des mâchoires de serrage (2) ;
c) amener de profil de sommet de façon essentiellement tangentielle sur le noyau de bourrelet (7) en faisant tourner la table de support (1) autour de l'axe de rotation (A) ;
d) couper le profilé de sommet à la longueur voulue, relier les extrémités pour former un anneau fermé et rouler le profilé de sommet sur le noyau de bourrelet (7) de façon à former l'ensemble de noyau ;
e) déplacer les segments (10) de la table de support (1) dans la position libérant le séparateur (30) et abaisser les mâchoires de serrage (2) pour déposer l'ensemble de noyau serré sur le séparateur (30) ;
f) rouler le profilé de sommet sur la surface du séparateur (30).

11. Procédé selon la revendication 10, **caractérisé en ce que** les segments (10) sont déplacés radialement par rapport à l'axe de rotation (A) de la table de support (1) entre la position fermée de l'étape a) et la position de libération de l'étape e).

12. Procédé selon la revendication 10 ou 11, **caractérisé en ce que** le séparateur (30) prévu est serré et centré dans le logement (3).
